# FASCICULE DE BREVET EUROPEEN

(11) **EP 1 297 945 B1**
(45) Date de publication et mention de la délivrance du brevet: **14.04.2004**
(21) Numéro de dépôt: 02021655.2
(22) Date de dépôt: 27.09.2002
(51) Int. Cl.: B29C 65/78, B29C 65/02

(54) **Machine d'assemblage de feuilles de matières plastiques de grandes dimensions**
Maschine zum Zusammensetzen grossformatiger Kunststofffolien
Machine for assembling large sized plastic sheets

(30) Priorité: 27.09.2001 FR 0112597
(43) Date de publication de la demande: 02.04.2003
(73) Titulaire: Albon Plastiques, 26140 Saint-Rambert (FR)
(72) Inventeur: Prenat Louis, 69002 Lyon (FR)
(74) Mandataire: PH. Arbousse-Bastide

(56) Documents cités:
- FR-A- 629 257
- FR-A- 1 267 097

## Description

La présente invention a pour objet une machine d'assemblage de feuilles de matières plastiques de grandes dimensions.

L'assemblage bord sur bord de deux feuilles de matières plastiques de grandes dimensions est réalisée actuellement par deux opérateurs placés à l'entrée et à la sortie d'une machine d'assemblage constituée d'un plateau horizontal comportant une électrode fixe sur laquelle le premier opérateur place les deux bords des deux feuilles à assembler puis celui-ci, après s'être assuré que les deux bords sont placés correctement sur l'électrode fixe, commande la descente d'une électrode mobile en translation verticale au-dessus desdits bords pour l'amener à leur contact et les souder l'un à l'autre. Lorsque l'opération de soudage est terminée le deuxième opérateur effectue d'une part une traction sur les deux feuilles pour évacuer les deux bords soudés l'un à l'autre de manière à permettre au premier opérateur de présenter une nouvelle section de bords à souder et d'autre part un positionnement de la matière dans l'axe de l'électrode fixe pour aider le premier opérateur à placer les deux bords l'un sur l'autre sur l'électrode fixe.

Toutefois, l'utilisation de ces machines entraîne un coût d'assemblage élevé du fait de la présence de deux opérateurs. D'autre part, les opérations de manipulation des feuilles sont pénibles pour l'opérateur qui se trouve à la sortie de la machine et qui doit tirer avec force les deux feuilles de grandes dimensions à chaque section de bords assemblés pour les évacuer du poste de soudage. Par ailleurs, il arrive parfois que l'opérateur, qui maintient les deux bords sur l'électrode fixe durant leur soudage, positionne par mégarde ses doigts entre les deux électrodes qui sont alors pincés entre ces dernières.

La présente invention a pour but de remédier à ces inconvénients en proposant une machine d'assemblage de feuilles de matières plastiques de grandes dimensions d'un coût de fonctionnement inférieur aux machines actuelles et offrant de meilleures conditions de sécurité.

La machine d'assemblage selon la présente invention est du type comportant une unité de soudage formée d'un plateau horizontal comportant une fente traversée longitudinalement par une électrode fixe et d'une électrode mobile en translation verticale au-dessus de ladite électrode fixe et se caractérise essentiellement en ce que ledit plateau horizontal est mobile en translation horizontale, dans le sens longitudinal donné par l'électrode fixe dont la longueur est inférieure à celle de la fente, de manière à permettre le déplacement dudit plateau qui comporte des moyens permettant de maintenir une partie des feuilles sur le plateau en position d'assemblage et en ce que ladite machine comporte des moyens de commande des moyens de maintien des feuilles sur le plateau et un automate de contrôle des différentes opérations.

Les moyens qui permettent de maintenir les feuilles sur le plateau pourront se présenter sous la forme de trous d'aspiration pratiqués dans la surface supérieure dudit plateau permettant de créer des zones de dépression ayant pour effet de plaquer la partie de la feuille à assembler contre la surface supérieure du plateau. Les trous d'aspirations seront de préférence répartis en deux rangées de trous s'étendant de part et d'autre de l'axe longitudinal du plateau passant par l'électrode fixe, chaque rangée de trous permettant la solidarisation d'une feuille au plateau.

Dans un mode de réalisation préférentiel le plateau comportera au moins un bouton poussoir intégré dans la face supérieure du plateau pour la commande des trous d'aspiration. Le plateau comportera de préférence deux boutons poussoirs aptes à commander chacun une rangée de trous d'aspiration. Les deux boutons poussoirs de commande des trous d'aspiration pourront être également utilisés pour la commande du déplacement du plateau, notamment en phase de démarrage du processus de soudage, après avoir positionné la première partie des feuilles à assembler sur le plateau. L'automate ne commandera le déplacement du plateau qu'après validation de l'opérateur du positionnement des feuilles à assembler sur le plateau.

Ainsi, la machine selon la présente invention présente l'avantage par rapport aux machines actuelles de fonctionner avec un seul opérateur placé à l'entrée de la machine.

Les avantages et les caractéristiques de la présente invention ressortiront plus clairement de la description qui suit et qui se rapporte au dessin annexé, lequel en représente un mode de réalisation non limitatif.
- la figure 1 représente une vue de profil schématique d'une machine selon la présente invention.
- la figure 2 représente une vue partielle en perspective de la partie avant de la machine selon la présente invention.
- les figures 3a,3b,3c,3d et 3e représentent de manière schématique les différentes étapes de fonctionnement de la machine.

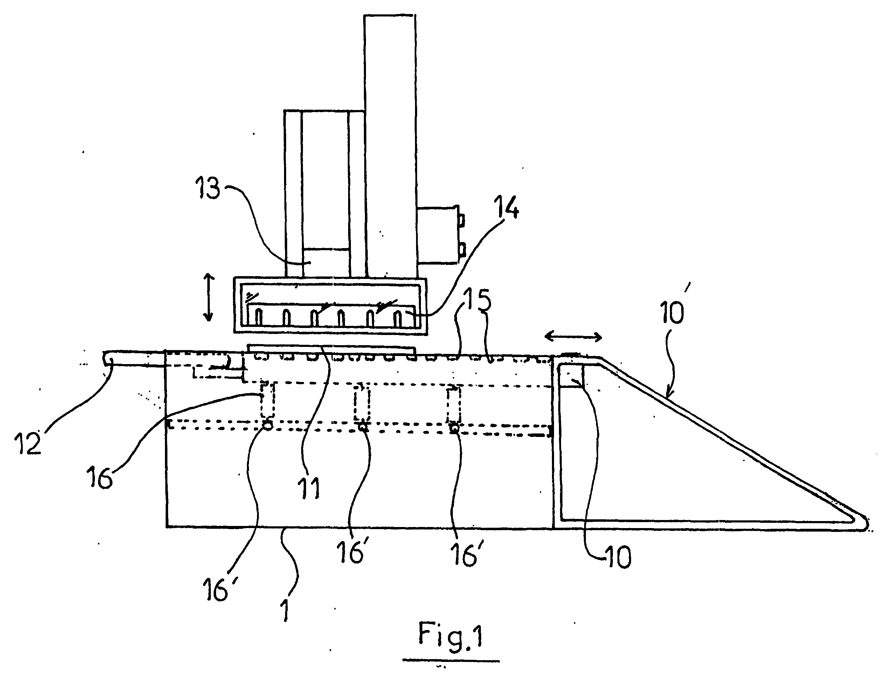

Si on se réfère à la figure 1 on peut voir qu'une machine d'assemblage selon la présente invention est constituée d'une part d'un châssis 1 supportant une table horizontale 10 de forme rectangulaire pour le positionnement des feuilles à assembler, lequel châssis 1 se prolonge à sa partie avant par deux rampes 10' entre lesquelles évolue un opérateur non représenté et d'autre part d'un chariot 13 mobile en translation verticale au-dessus de la table 10 et portant une électrode horizontale 14.

La machine d'assemblage est contrôlée et commandée en fonctionnement par l'opérateur et par un automate.

La table 10 est traversée longitudinalement par une électrode fixe 11 solidarisée au châssis 1 permettant la solidarisation des feuilles par soudage avec l'électrode mobile 14 et est montée coulissante dans le sens de son axe longitudinal parallèle à l'électrode fixe 11. La table 10 comporte des trous d'aspiration 15 créant des zones de dépression permettant de maintenir les feuilles en position sur la table 1.

On peut voir également que la table 10 est mobile en translation verticale grâce à des vérins 16 montés chacun sur un moyen de roulement 16' guidé en translation dans un rail de guidage 17 permettant de faire coulisser la table 1 dans le châssis 1.

Les deux rampes 10' permettent à l'opérateur de préparer les feuilles à assembler avant leur positionnement sur la table 10 et empêchent les feuilles de venir au contact des coins de la table 10 et d'être déchirées.

Une tablette 12 située à la partie arrière du châssis, en sortie de la machine, est solidarisée à la table 10 et rendue mobile en translation avec cette dernière. Elle a pour fonction de faciliter l'évacuation des parties de feuilles assemblées en les supportant et en les tirant. La tablette 12 permet ainsi de faire tomber les parties de feuilles soudées entre elles à un point éloigné en arrière de la table 10 et d'empêcher la formation de pli et de bourrage qui se produirait sans la présence de la tablette et qui aurait pour conséquence de décoller les feuilles à l'avant de la machine. La tablette 12 a donc pour fonction d'accompagner l'évacuation des parties de feuilles soudées tout en les maintenant à plat sur la table 10 afin d'éviter qu'elles se soulèvent et que l'air passant sous les feuilles les désolidarise de la table 10.

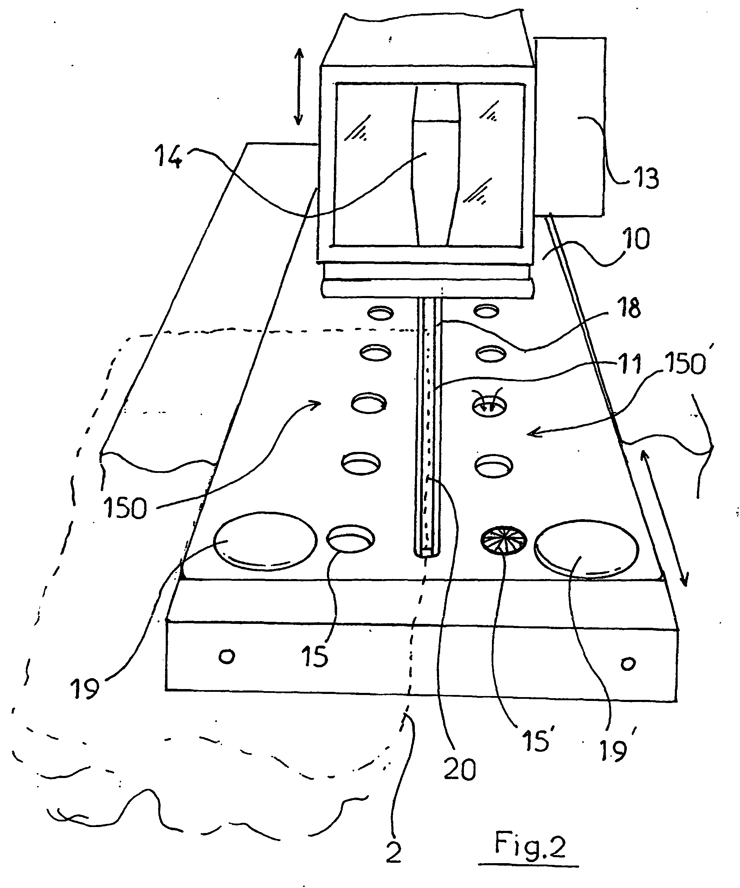

Si on se réfère également à la figure 2 on peut voir que la table 10 coulissante comporte une fente 18 pratiquée centralement dans son sens longitudinal et qui est traversée par l'électrode fixe 11 de longueur inférieure à celle de la fente 18 de manière à permettre le déplacement de la table 10.

De manière à protéger l'opérateur l'électrode mobile 14 est isolée par une cage 14' ouverte à sa face inférieure.

On peut voir également sur cette figure que la table 10 comporte deux rangées 150,150' de trous d'aspiration 15 situées de part et d'autre de la fente 18 et commandés en fonction d'aspiration au moyen de deux boutons poussoirs 19,19' aptes à commander également le déplacement de la table 10 coulissante.

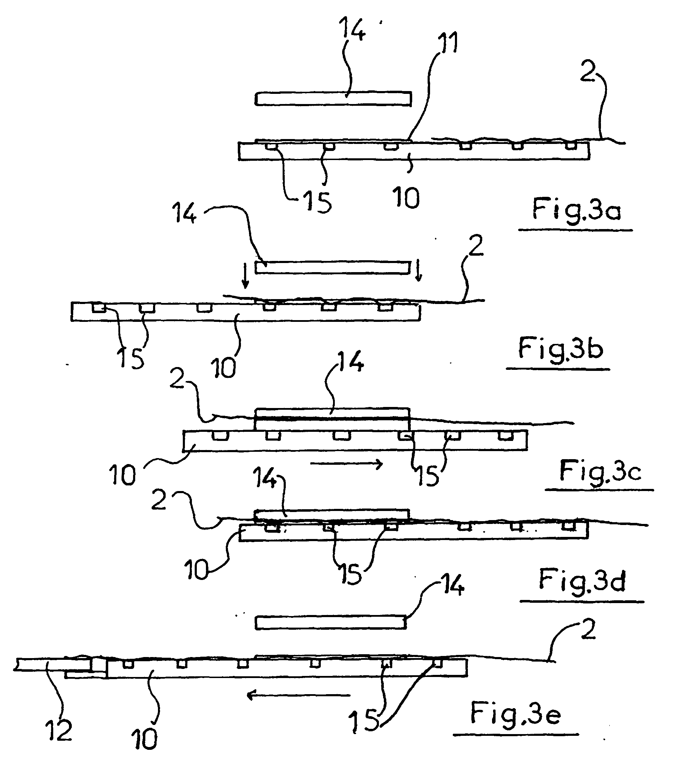

Si on se réfère également aux figures 3a,3b,3c,3d,3e, on peut voir que le fonctionnement de la machine est le suivant :

L'opérateur présente une partie d'une feuille 2 de grandes dimensions sur la table 10 (figure 3a) de manière à positionner le bord 20 de la feuille 2 à assembler avec le bord d'une deuxième feuille, non représentée, sur la fente 18 de la table 10, puis celui-ci commande le fonctionnement des trous 15 de la rangée 150 correspondante en appuyant sur le bouton poussoir 19 situé à proximité de la rangée de trous 15 ce qui a pour effet de solidariser la feuille 2 sur la table 10, la deuxième feuille est alors positionnée de la même manière en la superposant bord à bord avec la première feuille 2, puis l'opérateur commande le fonctionnement de la deuxième rangée 150' de trous d'aspiration 15 pour maintenir la deuxième feuille en position sur la table 10.

L'opérateur commande alors le déplacement de la table 10 (figure 3b) de manière à présenter les deux bords à assembler au-dessus de l'électrode fixe en position de soudage.

Puis l'automate qui gère la machine, après avoir détecté la position de soudage des deux feuilles, commande la descente de l'électrode mobile sur les deux bords des deux feuilles (fig. 3c) et la mise en oeuvre de l'opération de soudage. Pendant l'opération de soudage l'automate commande l'arrêt du fonctionnement des trous d'aspiration 15 puis commande la descente de la table 10 au moyen des vérins de manière à la faire coulisser vers l'avant de la machine en limitant les frottements avec les deux feuilles. Lors du coulissement vers l'avant de la machine, la partie arrière de la table 10 vient alors se présenter sous les bords en cours de soudage et la partie avant de la table 10 vient se présenter au niveau de l'opérateur qui peut alors durant l'opération de soudage positionner une nouvelle section de bords à assembler (fig.3d).

Pour évacuer la section de bords soudés, l'automate commande le déplacement de la table 10 vers l'arrière de la machine uniquement lorsque l'opérateur a validé l'opération de positionnement d'une nouvelle section de bords à assembler sur la table 10 et après avoir commandé la remontée de la table 10 au niveau initial.

Une fois l'opération de soudage terminée, l'automate commande le déplacement de la table 10 vers l'arrière (figure e) pour évacuer la parties des bords soudés des deux feuilles 2 de grandes dimensions.

Contrairement aux procédés actuels où les opérations de positionnement et de soudure sont successives, avec la machine d'assemblage selon la présente invention elles se font en un temps masqué à savoir que le positionnement des feuilles est effectué avec la machine selon la présente invention pendant l'opération de soudage et avec une seule personne.

## Revendications

1. Machine d'assemblage de feuilles (2) de matières plastiques de grandes dimensions comportant une unité de soudage formée d'un plateau (10) horizontal comportant une fente (18) traversée longitudinalement par une électrode (11) fixe et d'une électrode (14) mobile en translation verticale au-dessus de ladite électrode fixe **caractérisée en ce que** ledit plateau (10) horizontal est mobile en translation horizontale dans le sens longitudinal donné par l'électrode fixe (11) dont la longueur est inférieure à celle de la fente (18) de manière à permettre le déplacement dudit plateau (10) qui comporte des moyens (15) permettant de maintenir une partie des feuilles (2) sur le plateau (10) en position d'assemblage et **en ce que** ladite machine comporte des moyens de commande (19,19') des moyens de maintien des feuilles sur le plateau et un automate de contrôle des différentes opérations.

2. Machine selon la revendication 1 **caractérisée en ce que** les moyens qui permettent de maintenir les feuilles (2) sur le plateau (10) se présentent sous la forme de trous d'aspiration (15) pratiqués dans la surface supérieure dudit plateau (10) permettant de créer des zones de dépression ayant pour effet de plaquer la partie de la feuille (2) à assembler contre la surface supérieure du plateau (10).

3. Machine selon la revendication 2 **caractérisée en ce que** les trous d'aspirations (15,15') sont répartis en deux rangées (150,150') de trous (15) s'étendant de part et d'autre de l'axe longitudinal du plateau passant par l'électrode fixe (11), chaque rangée de trous (15) permettant la solidarisation d'une feuille (2) au plateau (10).

4. Machine selon la revendication 2 ou la revendication 3 **caractérisée en ce que** le plateau (10) comporte au moins un bouton poussoir (19,19') intégré dans la face supérieure du plateau (10) pour la commande des trous d'aspiration.

5. Machine selon la revendication 3 **caractérisée en ce que** le plateau (10) comporte deux boutons poussoirs (19,19') aptes à commander chacun une rangée (150,150') de trous d'aspiration (15).

6. Machine selon l'une quelconque des revendications 2 à 5 **caractérisée en ce que** les trous d'aspiration (15,15') sont aptes à recevoir des croisillons permettant d'éviter la déformation des feuilles (2) au point d'aspiration.

7. Machine selon l'une quelconque des revendications précédentes **caractérisée en ce que** le plateau (10) est également mobile en translation verticale.

8. Machine selon la revendication 7 **caractérisée en ce que** le plateau (10) est mobile en translation verticale grâce à des vérins (16) montés chacun sur un moyen de roulement (16') guidé en translation dans un rail de guidage (17) permettant de faire coulisser le plateau (10).

9. Machine selon l'une quelconque des revendications précédentes **caractérisée en ce qu'**une tablette (12), située en sortie de la machine, est solidarisée au plateau (10) et rendue mobile en translation avec cette dernière.

10. Machine selon l'une quelconque des revendications précédentes **caractérisée en ce que** le châssis de la machine qui supporte le plateau (10) se prolonge à sa partie avant, à l'entrée de la machine, par des rampes (10') entre lesquels évolue l'opérateur.

## Claims

1. Machine for assembling large sheets (2) of plastic consisting of a welding unit formed by a horizontal plate (10), including a slit (18) through which passes a fixed electrode (11) and a mobile electrode (14) moving vertically above the said fixed electrode, **characterised in that** the said horizontal plate (10) moves horizontally in the lengthwise direction determined by the fixed electrode (11), whose length is shorter than that of the slit (18) so as to allow the movement of the said plate (10), which includes means (15) allowing a part of the sheets (2) on the plate (10) to be held in the assembly position, and **in that** the said machine includes a means (19, 19') of controlling the means holding the sheets on the plate and an automatic controller for the different operations.

2. Machine according to claim 1 **characterised in that** the means allowing the sheets (2) to be held on the plate (10) take the form of suction holes (15) made in the upper surface of the said plate (10) allowing areas of negative pressure to be created with the effect of pressing the part of the sheet (2) to be assembled against the upper surface of the plate (10).

3. Machine according to claim 2 **characterised in that** the suction holes (15, 15') are arranged in two rows (150, 150') of holes (15) running on either side of the longitudinal axis of the plate passing over the fixed electrode (11), each row of holes (15) allowing the sheet (2) to be fixed to the plate (10).

4. Machine according to claim 2 or claim 3 **characterised in that** the plate (10) includes at least one pushbutton (19, 19') integrated in the upper side of the plate (10) to control the suction holes.

5. Machine according to claim 4 **characterised in that** the plate (10) includes two pushbuttons (19, 19'), each able to control one row (150, 150') of suction holes.

6. Machine according to any one of claims 2 to 5 **characterised in that** the suction holes (15, 15') are able to receive grids allowing the deformation of the sheets (2) to be avoided at the point of suction.

7. Machine according to any one of the previous claims **characterised in that** the plate (10) also moves vertically.

8. Machine according to claim 7 **characterised in that** the plate (10) is moved vertically by means of cylinders (16) each placed on a means of rolling, its movement guided in a guide rail (17) allowing the plate (10) to be slid.

9. Machine according to any one of the previous claims **characterised in that** a tablet (12), situated at the machine delivery end, is connected to the plate (10) and able to move with the latter,

10. Machine according to any one of the previous claims **characterised in that** the front part of the machine frame which supports the plate (10) is extended, on the machine feeding side, by ramps (10') between which the operator moves.

## Patentansprüche

1. Verbindungsmaschine für großflächige Kunststoff-Folien (2) die eine aus einer waagerechten Platte (10) mit einem in Längsrichtung von einer feststehenden Elektrode (1) durchdrungenen Schlitz (18) und aus einer beweglichen Elektrode (14), die sich senkrecht über der genannten Elektrode verschiebt bestehende Schweißeinheit umfasst,
**dadurch gekennzeichnet, dass** die genannte Platte (10) in waagerechter Verschiebung in der von der feststehenden Elektrode (11), deren Länge kleiner ist als die des Schlitzes (18) festgelegten Längsrichtung derart verschiebbar ist, um die Verlagerung der genannten Platte (10) zu ermöglichen, welche Mittel umfasst (15) die es ermöglichen einen Teil der Folien (2) in Verbindungsposition auf der Platte (10) festzuhalten und dass die genannte Maschine Steuermittel (19, 19') für die Festhaltemittel der Folien auf der Platte sowie einen Kontrollautomaten für die verschiedenen Vorgänge umfasst.

2. Maschine nach Anspruch 1,
**dadurch gekennzeichnet, dass** die Mittel zum Festhalten der Folien (2) auf der Platte (10) als in der Oberfläche der genannten Platte (10) angeordneten Ansaugöffnungen (15) ausgestaltet sind, die es ermöglichen Unterdruckbereiche zu erzeugen, welche den zu verbindenden Folienteil (2) zum Anliegen gegen die Oberfläche der Platte (10) bringt.

3. Maschine nach Anspruch 2,
**dadurch gekennzeichnet, dass** die Ansaugöffnungen (15, 15') in zwei Öffnungs-(15)reihen (150, 150') aufgeteilt sind, welche sich beidseitig von der Längsachse der Platte erstrecken, welche durch die feststehende Elektrode (11) gezogen ist, wobei jede Öffnungsreihe es ermöglicht, eine Folie (2) auf der Platte (10) festzuhalten.

4. Maschine nach Anspruch 2 oder 3,
**dadurch gekennzeichnet, dass** die Platte (10) mindestens einen Druckknopf (19, 19') umfasst, der in der oberen Plattenseite (10) eingefügt ist und zur Steuerung der Ansaugöffnungen dient.

5. Maschine nach Anspruch ?,
**dadurch gekennzeichnet, dass** die Platte (10) zwei Druckknöpfe (19, 19') umfasst, die dazu vorgesehen sind, um jeweils eine Reihe (150, 150') von Ansaugöffnungen (15) zu steuern.

6. Maschine nach einem der Ansprüche 2 bis 5,
**dadurch gekennzeichnet, dass** die Ansaugöffnungen (15, 15') dazu vorgesehen sind, um mit Kreuzzapfen versehen zu sein, die es ermöglichen, an der Ansaugstelle eine Verformung der Folien (2) zu vermeiden.

7. Maschine nach einem der vorhergehenden Ansprüche,
**dadurch gekennzeichnet, dass** die Platte (10) ebenfalls senkrecht verschiebbar ist.

8. Maschine nach Anspruch 7,
**dadurch gekennzeichnet, dass** die Platte (10) über Zylinder (16) senkrecht verschiebbar ist, welche jeweils auf einem Laufmittel (16') angebracht sind, das durch eine Führungsschiene (17) in Verschiebbewegung geführt ist, die ein Gleiten der Platte (10) ermöglicht.

9. Maschine nach einem der vorhergehenden Ansprüche,
**dadurch gekennzeichnet, dass** eine am Ausgang der Maschine angeordnete Tablette (17) fest mit der Platte (10) verbunden und mit dieser verschiebbar ausgestaltet ist.

10. Maschine nach einem der vorhergehenden Ansprüche,
**dadurch gekennzeichnet, dass** das die Platte (10) tragende Maschinengestell an seiner Vorderseite am Maschineneingang durch Rampen (10') verlängert ist, zwischen welchen der Bediener sich bewegt.
